# DEMANDE DE BREVET EUROPEEN

(11) **EP 1 085 587 A1**
(43) Date de publication de la demande: **21.03.2001**
(21) Numéro de dépôt: 00402573.0
(22) Date de dépôt: 18.09.2000
(51) Int. Cl.: H01M 2/06, H01M 2/30

(54) **Batterie de générateurs électrochimiques**

(30) Priorité: 20.09.1999 FR 9911727
(71) Demandeur: ALCATEL, 75008 Paris (FR)
(72) Inventeur: Nadeau, Eric, 86800 Savigny l'Evescault (FR); Demarty, Dominique, 86360 Chasseneuil (FR)
(74) Mandataire: Laroche, Danièle

(57) **Abrégé**

La présente invention a pour objet une batterie de générateurs électrochimiques disposés dans un conteneur en matériau isolant comportant au moins une paroi, comprenant des éléments de contact pour le raccordement de ladite batterie à une application extérieure, caractérisé en ce que lesdits éléments sont regroupés et séparés par des cloisons en matériau isolant formant ainsi un bornier unique, lesdites cloisons et ladite paroi étant constituées d'une seule pièce.

## Description

La présente invention concerne une batterie de générateurs électrochimiques primaires ou secondaires comportant des éléments de contact électrique pour le passage du courant et le recueil d'information sur les caractéristiques de la batterie. Ces éléments sont destinés à coopérer avec un connecteur porté par une application extérieure à laquelle on souhaite relier la batterie, par exemple un équipement de télécommunication.

Une batterie est constituée de plusieurs générateurs électrochimiques montés en série et/ou en parallèle et assemblés dans un conteneur commun. Une batterie comporte généralement des bornes communes, respectivement de polarité positive et négative, qui assurent l'alimentation électrique d'un appareil extérieur à la batterie. D'autres informations peuvent être nécessaires au bon fonctionnement de la batterie, notamment la température ou l'état de charge des générateurs. Ces informations sont obtenues par des mesures directes ou bien recueillies après avoir été mémorisées. Elles sont transmises à l'appareil extérieur par l'intermédiaires d'éléments de contact permettant l'établissement de liaisons.

Le document EP-0 349 473 décrit une batterie comprenant un bac que les bornes terminales traversent. Un connecteur, destiné à connecter ces bornes à plusieurs câbles enfichables, est intégré et solidarisé à ce bac, et de préférence encastré dans la matière plastique du bac de la batterie. Lorsque le connecteur est intégré au couvercle, il est immobilisé entre la partie de dessus et la partie de dessous du couvercle. Il peut aussi être inséré dans un logement ménagé dans la paroi latérale et maintenu en place par un cran.

Dans ce cas l'entrée et la sortie commune du courant est assuré par des bornes de type classique reliées à un connecteur chargé de multiplier les possibilités de liaisons. L'inconvénient d'une telle batterie réside dans le problème de la fixation du connecteur rapporté de telle sorte qu'il soit solidement maintenu, et dans l'encombrement qui en résulte.

Le document DE-44 06 079 décrit un boîtier d'accumulateur composé d'un boîtier inférieur et d'une base portant un connecteur mâle destiné à permettre la liaison avec un chargeur ou une machine-outil.

Mais pour certaines utilisations particulières, les batteries doivent être immergées. L'étanchéité aussi bien de la batterie et que du connecteur est essentielle. L'intégration d'un composant en relation avec l'extérieur est toujours une source de risque vis-à-vis de l'étanchéité de l'ensemble.

Le document GB-2 183 081 concerne un boîtier étanche destiné à recevoir et à protéger une batterie. Le couvercle du boîtier comporte deux bornes constituant des pièces mâles susceptibles de s'adapter aux extrémités femelles des bornes de la batterie. Les bornes du boîtier peuvent être reliées à des connecteurs de raccordements.

Le boîtier disposé autour de la batterie ajoute inutilement un volume et un poids supplémentaire, ce qui n'est habituellement pas souhaité par les utilisateurs.

En outre les connecteurs employés dans ces batteries connues sont des composants commerciaux standards destinés à des utilisations variées que leur polyvalence rend complexe. De ce fait ils ne correspondent pas exactement au besoin des fabricants de batteries et leur coût est jugé trop élevé.

La présente invention a pour but de proposer une batterie apte à être reliée à une application extérieure dont le coût de fabrication est réduit et qui est étroitement adaptée au besoin de l'utilisateur.

L'invention a aussi pour but de proposer une batterie dont l'étanchéité en cas d'immersion est plus fiable.

L'objet de la présente invention est une batterie de générateurs électrochimiques disposés dans un conteneur en matériau isolant comportant au moins une paroi portant un bornier pour le raccordement de ladite batterie à une application extérieure, caractérisé en ce que ledit bornier est un bornier femelle étanche constitué d'un corps en matériau isolant comportant des cheminées, ledit corps constituant une seule pièce avec ladite paroi, et d'éléments de contact partiellement creux de forme tubulaire et de diamètre extérieur au plus égal à 2,9mm, lesdits éléments étant placés dans lesdites cheminées et l'étanchéité entre ledit corps et lesdits éléments étant assurée par une résine.

Ledit matériau isolant est choisi parmi les polyamides, les polyoléfines, comme le polyéthylène (PE) ou le polypropylène (PP), les polystyrènes, les polycarbonates, l'oxyde de polyphénylène (PPO), les copolymères acrylonitrile / butadiène / styrène (ABS).

De préférence le matériau isolant est le polyamide 6-6. Ses caractéristiques, notamment mécaniques, chimiques et électriques, correspondent à celles qui sont recherchées. Son utilisation est avantageuse grâce à sa facilité de moulage et son faible coût.

Selon une forme d'exécution de l'invention, ledit matériau isolant contient en outre un agent de renforcement. Ledit agent de renforcement est de préférence constitué de fibres de verres.

De manière préférentielle, ledit matériau isolant est le polyamide 6-6 et contient 30% en poids de fibres de verre.

La batterie selon l'invention comprend un bornier de type femelle dont les éléments de contact sont de forme tubulaire et partiellement creux. Ces éléments tubulaires portent à chaque extrémité une section creuse destinée à recevoir d'une part les connexions issues de la batterie et d'autre part les broches enfichables appartenant à un connecteur mâle adapté. Grâce au jeu existant entre l'élément de contact et la paroi du logement, les extrémités creuses disposent ainsi d'une certaine souplesse facilitant l'enfichage.

Avantageusement les éléments de contact sont munis d'un épaulement annulaire externe. Lors de la mise en place de l'élément conducteur dans une cheminée traversant le corps isolant du bornier, l'épaulement va s'appuyer en butée sur un lamage ménagé sur la paroi interne de la cheminée. Dans ce cas on peut prévoir un jeu un peu plus important.

L'étanchéité de la batterie au niveau dudit bornier est assurée par une résine introduite dans la partie interne du bornier muni desdits éléments de contact raccordés électriquement aux générateurs électrochimiques. L'épaulement sert alors de barrière empêchant la résine de s'échapper vers l'extérieur. Il est aussi utilisé pour fixer précisément la quantité de résine nécessaire. Lorsque l'élément ne possède pas d'épaulement, la viscosité de la résine alliée au faible jeu entre l'élément et la paroi du logement n'autorise pas la pénétration de la résine au delà de la limite souhaitée.

Par ailleurs l'étanchéité de la liaison dudit bornier avec un connecteur relié à ladite application est assurée par un joint, entourant extérieurement ledit bornier, sur lequel vient s'appuyer ledit connecteur. Le joint est de préférence placé dans un logement prévu à cet effet. Lors de l'enfichage, le corps isolant du connecteur vient en contact avec la partie du bornier où est placé le joint.

La présente invention a aussi pour objet le procédé de fabrication de la batterie décrite précédemment, dans lequel ladite paroi et ledit corps isolant sont réalisés simultanément par moulage, et de préférence par moulage par injection.

La présente invention a comme avantage de permettre de s'affranchir des problème d'insertion et de fixation d'un connecteur sur le conteneur de la batterie tant au point du maintien que de l'étanchéité de l'interface. Le procédé de fabrication en est raccourci et simplifié car le nombre de pièces et d'opérations d'assemblage est diminué. La fabrication des batteries est plus économique et plus fiable.

L'invention sera mieux comprise et d'autres avantages et particularités apparaîtront à la lecture de la description qui va suivre, donnée à titre non limitatif, accompagnée des dessins annexés parmi lesquels:
- la figure 1 est une vue en perspective de la batterie selon l'invention,
- la figure 2 est une vue partielle de dessus du conteneur de la batterie de la figure 1,
- la figure 3 est une vue partielle en coupe longitudinale du conteneur de la batterie de la figure 1,
- la figure 4 est une vue en coupe transversale du conteneur de la batterie de la figure 1,
- la figure 5 représente une variante d'un élément de contact du bornier selon l'invention,
- la figure 6 représente une autre variante d'un élément de contact,
- la figure 7 montre en coupe la position de l'élément de contact de la figure 6 dans le corps du bornier,

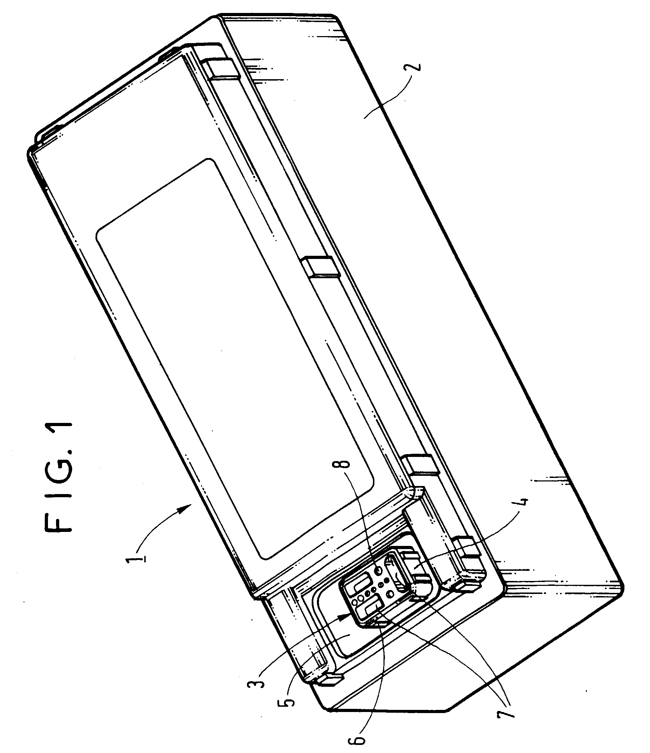

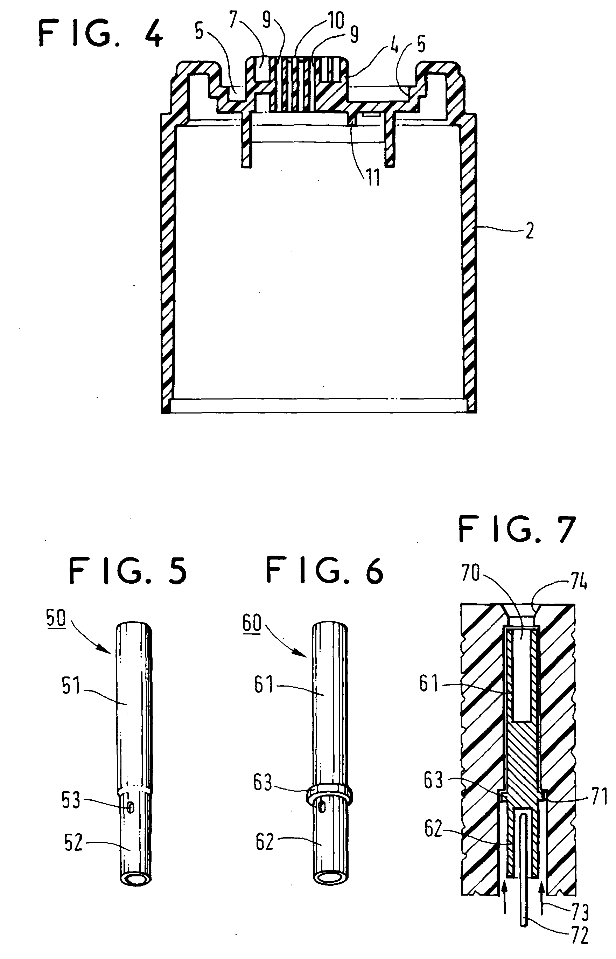

- la figure 7 représente un exemple de connecteur adapté au bornier de la batterie de la figure 1.

On a représenté sur la figure 1 un mode particulier de réalisation d'une batterie 1 selon la présente invention. La batterie 1 possède un conteneur 2 prismatique fermé par un fond non représenté. La face supérieure du conteneur 2 comporte un bornier 3 dont le corps isolant 4 fait partie intégrante du conteneur 2. Le bornier 3 est entouré d'un logement 5 destiné à recevoir un joint d'étanchéité. Le bornier 3 porte des nervures 6 servant de guide pour l'enfichage d'un connecteur extérieur adapté. Des évidements 7 peuvent être prévus dans le corps 4 du bornier 3 afin d'accueillir les broches du connecteur dont la fonction n'est pas requise par la batterie.

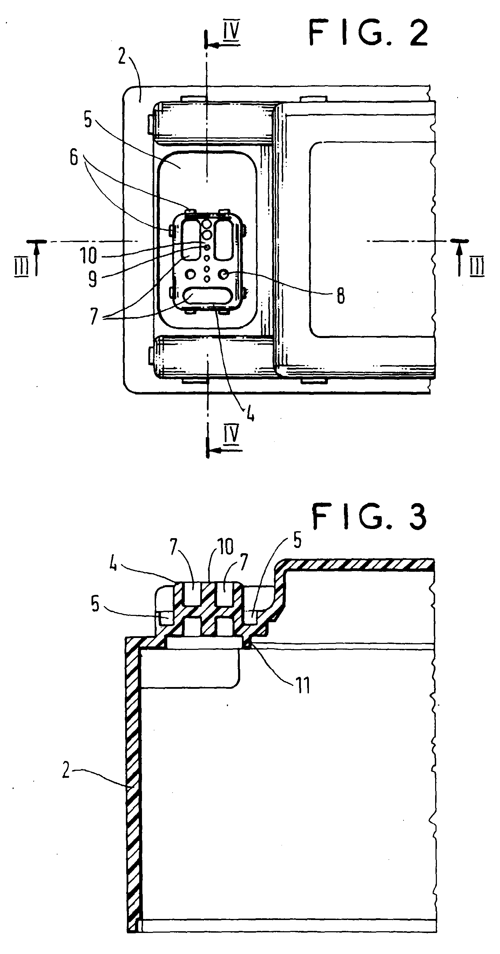

Les figures 2 à 4 montrent en vue de dessus et en coupe l'extrémité du conteneur 2 de la batterie 1 comprenant le corps 4 du bornier 3. Afin d'établir le raccordement électrique de la batterie 1 avec une application extérieure, le corps 4 du bornier 3 comporte des cheminées 8, 9, séparées par des cloisons isolantes 10, destinées à recevoir des éléments aptes à établir le contact avec un connecteur adapté relié à une application extérieure. Les cheminées 8 sont par exemple destinées à recevoir des éléments conducteurs constituant les pôles respectivement positif et négatif de la batterie qui assurent l'alimentation en courant de l'application. Les cheminées 9 sont par exemple destinées à recevoir des éléments de contact pour la transmission des informations relatives à la batterie vers l'application. La face du corps 4 située à l'intérieur du conteneur 2 est munie d'un rebord 11 empêchant l'échappement de la résine.

Le bornier selon l'invention présente l'avantage de ne pas ajouter un volume supplémentaire à la batterie puisqu'il est contenu dans le volume enveloppe du conteneur, défini par l'intersection des faces horizontales et verticales.

Sur la figure 5 est représenté un élément de contact 50 qui est une douille conductrice de forme tubulaire. Dans le cas présent, le diamètre de la partie vers l'extérieur 51 est par exemple de l'ordre de 1,6mm et celui de la partie vers l'intérieur 52 est de l'ordre de 1,2mm. Un trou circulaire 53 est ménagé dans la paroi de la partie interne 52 de la douille 50 qui permet l'échappement de gaz si on désire souder une connexion dans la partie 52. Ces éléments de contact sont notamment destinés à la transmission d'informations.

Sur la figure 6 est représenté un élément de contact 60 qui est une douille conductrice de forme tubulaire. Dans le cas présent, le diamètre de la partie vers l'extérieur 61 est par exemple de l'ordre de 2,9mm et celui de la partie vers l'intérieur 62 est de l'ordre de 2,6mm. La douille 60 porte un épaulement annulaire 63 placé environ aux deux tiers de sa hauteur et qui sépare ces deux parties 61, 62, Le diamètre extérieur de l'épaulement 63 est par exemple de l'ordre de 3,3mm. Ces éléments de contact sont notamment destinés à être utilisés comme sortie de puissance de la batterie.

Lorsque la douille 60 est placée dans la cheminée 70 comme le montre la coupe de la figure 7, l'épaulement 63 s'appuie sur un lamage 71 de la paroi de la cheminée 70. Un fil conducteur 72 relié électriquement aux générateurs électrochimiques est inséré dans la partie interne 62 de la douille 60 pour y être serti. Puis la résine de consistance visqueuse est injectée comme le montre les flèches 73 et ne pénètre pas au-delà de l'épaulement 63. La partie externe 61 de la douille 60 est destinée à recevoir la broche d'un connecteur extérieur. Un chanfrein 74 facilite l'introduction de la broche.

## Revendications

1. Batterie de générateurs électrochimiques disposés dans un conteneur en matériau isolant comportant au moins une paroi portant un bornier pour le raccordement de ladite batterie à une application extérieure, caractérisé en ce que ledit bornier est un bornier femelle étanche constitué d'un corps en matériau isolant comportant des cheminées, ledit corps constituant une seule pièce avec ladite paroi, et d'éléments de contact partiellement creux de forme tubulaire et de diamètre extérieur au plus égal à 2,9mm, lesdits éléments étant placés dans lesdites cheminées et l'étanchéité entre ledit corps et lesdits éléments étant assurée par une résine.

2. Batterie selon la revendication 1, dans laquelle ledit matériau isolant est choisi parmi les polyamides, les polyoléfines, les polystyrènes, les polycarbonates, l'oxyde de polyphénylène et les copolymères acrylonitrile / butadiène / styrène.

3. Batterie selon la revendication 2, dans laquelle ledit matériau isolant est le polyamide 6-6.

4. Batterie selon l'une des revendications précédentes, dans laquelle ledit matériau isolant contient en outre un agent de renforcement.

5. Batterie selon la revendication 4, dans laquelle ledit agent de renforcement est constitué de fibres de verres.

6. Batterie selon la revendication 5, dans laquelle ledit matériau isolant est le polyamide 6-6 et contient 30% en poids de fibres de verre.

7. Batterie selon l'une des revendications précédentes, dans laquelle les éléments de contact sont munis d'un épaulement annulaire externe.

8. Batterie selon l'une des revendications précédentes, dans laquelle l'étanchéité de la liaison dudit bornier avec un connecteur relié à ladite application est assurée par un joint, entourant extérieurement ledit bornier, sur lequel vient s'appuyer ledit connecteur.

9. Procédé de fabrication d'une batterie selon l'une des revendications précédentes, dans lequel ladite paroi et ledit corps sont réalisées simultanément par moulage.

10. Procédé de fabrication d'une batterie selon la revendication 9, dans lequel ladite paroi et ledit corps sont réalisées par moulage par injection.
